# DEMANDE DE BREVET EUROPEEN

(11) **EP 2 792 926 A1**
(43) Date de publication de la demande: **22.10.2014**
(21) Numéro de dépôt: 14165277.6
(22) Date de dépôt: 17.04.2014
(51) Int. Cl.: F16M 11/40, F16M 13/02

(54) **Dispositif etanche et antibacterien de support de moyen d'affichage**

(30) Priorité: 18.04.2013 FR 1353550
(71) Demandeur: BE One Ingenerie, 78420 Carrieres sur Seine (FR)
(72) Inventeur: Germain, Marc, 78420 CARRIERES SUR SEINE (FR)
(74) Mandataire: Cabinet Plasseraud

(57) **Abrégé**

L'invention concerne un dispositif (1) de support de moyen d'affichage (ECR) comportant au moins :
- un bras flexible (2), étanche et antibactérien ayant une première (6) et une deuxième extrémité (7) ;
- un socle (3) placé à la première extrémité (6) du bras flexible (2), ledit socle comportant des moyens de fixation dudit dispositif (1) à une paroi ;
- des moyens de connexion à un boitier (4), étanche et antibactérien comprenant le moyen d'affichage (ECR), lesdits moyens de connexion étant placés à la deuxième extrémité (7) du bras flexible (2).

Dans le dispositif de l'invention, le bras flexible (2) et le boitier (4) connectés mécaniquement via lesdits moyens de connexion, forment un ensemble étanche et antibactérien.

## Description

La présente invention concerne un dispositif de support de moyen d'affichage, et plus particulièrement un dispositif de support étanche et antibactérien comprenant un bras flexible.

Dans les établissements collectifs, les infrastructures réseaux et les équipements proposés aux visiteurs se sont développés pour offrir de nouveaux services, améliorer le confort et l'accès à l'information.

Dans le milieu hospitalier par exemple, des postes de télévision sont généralement mis à disposition des patients pour accéder à des programmes télévisés, des services de vidéo à la demande ou consulter des pages internet. Afin d'optimiser la place dans les chambres des patients, ces postes de télévisions peuvent être fixés directement au mur, notamment par l'intermédiaire d'un bras articulé. Le bras articulé, dans une position plus ou moins déployée, permet de placer le poste de télévision dans une configuration adéquate pour être en regard du patient.

Pour que le patient soit en mesure de visionner confortablement un contenu affiché par le poste de télévision, il convient que le bras articulé offre une bonne maniabilité et un large panel de configurations possibles. A cet effet, le bras articulé se compose généralement de plusieurs pièces, dont différentes articulations mécaniques permettant d'augmenter les possibilités de réglages en position. Or, la multiplication des pièces d'assemblage alourdit le bras articulé de manière conséquente.

De surcroit, en fonction du poids du poste de télévision supporté par le bras et de la longueur de déploiement souhaitée du bras articulé, les forces de contrainte qui s'exercent au point d'attache mural peuvent être élevées.

Aussi, pour supporter les contraintes liées aux poids du bras articulé et du poste de télévision ainsi que des forces exercées inhérentes aux manipulations, il convient d'aménager des installations de renfort au point d'attache mural et prévoir des pièces complémentaires de soutien. On comprendra que de tels aménagements peuvent être complexes et onéreux à mettre en oeuvre. En outre, un établissement collectif ne dispose pas nécessairement de paroi capable de supporter le poids conséquent inhérent au bras articulé susmentionné.

Il existe un besoin d'alléger les dispositifs de support de poste de télévision.

Par ailleurs, dans le cadre d'un établissement collectif dans le domaine de la santé (hôpital ou clinique par exemple), les postes de télévision sont accessibles à tous les visiteurs, patients et membres du personnel. Les postes de télévision et/ou leur support peuvent être manipulés par chacun. Ils présentent donc une source potentielle non négligeable pour les maladies et infections nosocomiales. En outre, le nettoyage du poste de télévision et de son support nécessite des précautions toutes particulières pour éviter des défaillances électriques et électroniques pouvant être provoquées en présence d'un excès d'humidité et de projections d'eau ou de produits désinfectants.

On comprendra donc qu'il existe aussi un besoin pour améliorer la salubrité des équipements (tels que les postes de télévisions et leur support), ainsi que leur résistance aux nettoyages, lesquels sont très réguliers dans un milieu hospitalier pour des raisons sanitaires.

La présente invention vient améliorer la situation.

En l'occurrence, l'invention propose un dispositif de support de moyen d'affichage étanche et antibactérien, limitant le nombre de pièces et les masses suspendues.

A cet effet, l'invention vise un dispositif de support de moyen d'affichage comportant au moins :
- un bras flexible étanche et antibactérien ayant une première et une deuxième extrémité ;
- un socle placé à la première extrémité du bras flexible, ledit socle comportant des moyens de fixation dudit dispositif à une paroi ;
- des moyens de connexion à un boitier étanche et antibactérien comprenant le moyen d'affichage, lesdits moyens de connexion étant placés à la deuxième extrémité du bras flexible.

Avantageusement, le bras flexible et le boitier connectés mécaniquement via lesdits moyens de connexion, forment un ensemble étanche et antibactérien.

On entend par « bras flexible » un bras souple qui peut être courbé, jusqu'à un rayon de courbure limite, sans se briser ni s'endommager. Bien entendu, le rayon de courbure est fonction de la structure et de la composition du bras flexible, comme circonstancié plus loin.

Avec un tel bras flexible, le dispositif de support peut être agencé selon un large panel de configurations possibles, tout en conservant un bras d'un seul tenant. Ainsi, l'orientation et le déplacement du moyen d'affichage dans son environnement sont aisés, et cela sans nécessiter de pièces intermédiaires telles que des pièces mécaniques d'articulation par exemple. Le nombre de pièces d'assemblage du dispositif de support est notablement réduit, diminuant dès lors les masses suspendues tout en conservant une grande maniabilité.

On entend par « moyens de fixation à une paroi » des moyens de fixation aptes à s'ancrer et/ou s'encastrer dans une paroi ou toute installation fixe rattachée à une paroi. Une paroi peut être par exemple un mur, une cloison ou un meuble.

Les masses suspendues par le socle du dispositif de support étant réduites, notamment grâce à l'utilisation du bras flexible, les contraintes inhérentes au poids du bras et du moyen d'affichage sont moindres au niveau du point d'attache à la paroi. Aussi, le socle peut être fixé à la paroi sans nécessiter d'aménagements particuliers de renfort de celle-ci. L'installation du dispositif de support en est simplifiée.

Par ailleurs, on entend par « boitier étanche » un boitier empêchant le passage des particules de poussière et d'eau à l'intérieur de celui-ci. Le contenu du boitier dont le moyen d'affichage et ses composants électroniques, sont ainsi protégés de telles particules. Les risques de dysfonctionnements électriques et électroniques sont alors limités. Comme développé plus loin, différentes configurations de boitiers peuvent être envisagées pour éviter le passage des particules précitées.

Le boitier est aussi antibactérien. A cet effet, le boitier peut être composé d'un matériau antibactérien tel que de la silicone mélangée à des particules d'argent et/ou de cuivre par exemple.

Comme détaillé plus loin, le bras flexible est également étanche et antibactérien de telle sorte que le bras flexible et le boitier forment un ensemble étanche et antibactérien lorsqu'ils sont connectés mécaniquement via lesdits moyens de connexion. Cet ensemble étanche et antibactérien évite d'une part la présence et la prolifération de bactéries et, d'autre part, résiste aux projections d'eau inhérentes à un nettoyage par exemple. Ainsi, le dispositif de support de moyen d'affichage est particulièrement adapté à un usage dans un milieu hospitalier où les mesures sanitaires sont strictes et les nettoyages fréquents.

Avantageusement, le boitier de protection, le bras flexible et l'ensemble formé par le boitier connecté mécaniquement au bras flexible, sont étanches selon les indices de protection IP64 et/ou IP65 de la norme CEI 60529 de la Commission Electrotechnique Internationale.

De manière avantageuse, le bras flexible comprend au moins :
- un flexible hélicoïdal en métal ; et
- une couche extérieure souple et étanche, composée d'un matériau antibactérien.

Le flexible hélicoïdal en métal peut être adapté pour résister à une force de contrainte supérieure ou égale à l'effort en déformation inhérent aux poids cumulés du bras lui-même, du boitier de protection et du moyen d'affichage du dispositif. Le métal utilisé pour le flexible hélicoïdal peut être par exemple de l'acier ou de l'inox.

La composition et la rigidité du métal utilisé peuvent être fonction du niveau de résistance souhaité du bras flexible à un effort en déformation. En outre, le dimensionnement du flexible (en épaisseur et en longueur notamment) peut être ajusté selon la charge de poids à supporter ou la résistance souhaitée à un effort en déformation. En d'autres termes, le flexible hélicoïdal peut être composé et proportionné en fonction du poids du dispositif et/ou d'une facilité de manipulation voulue et/ou d'une résistance mécanique déterminée permettant un maintien en position du bras et du boitier.

La couche extérieure est souple afin de résister aux déformations appliquées au flexible hélicoïdal en acier (lorsqu'il est courbé notamment), sans se déchirer ni s'endommager. Cette couche recouvre avantageusement la totalité du flexible métallique. La couche extérieure de par son étanchéité, notamment à l'eau, évite que le flexible métallique soit exposé à des particules liquides. On comprendra que les risques d'une formation de rouille sur le flexible métallique sont alors restreints. Par ailleurs, la couche extérieure est prévue en outre pour résister aux produits désinfectants.

Le matériau antibactérien de la couche extérieure du bras flexible empêche, ou tout au moins limite considérablement, la présence de bactéries sur la périphérie du bras flexible. Ainsi, un utilisateur peut manipuler le bras flexible avec un risque limité de contact avec des microbes de maladies nosocomiales.

Dans une réalisation possible, le matériau antibactérien qui compose la couche extérieure souple est à base de silicone mélangée à des particules d'argent et/ou de cuivre.

Dans un mode de réalisation possible, le bras flexible comprend en outre, sous la couche extérieure souple et le long d'au moins une partie du bras flexible, un tube en métal.

Ce tube en métal, par exemple à base d'acier, est avantageusement un tube souple qui vient renforcer le bras flexible. Il peut être plein ou creux et placé à l'intérieur du flexible hélicoïdal. En variante, le tube en métal peut être creux et installé entre la couche extérieure et le flexible hélicoïdal (auquel cas le flexible est enserré par le tube en métal).

Selon une autre variante, lorsque le tube en métal est placé dans le bras flexible au moins sur une partie de la longueur du bras, le tube peut aussi être rigide ou quasi-rigide. De la sorte, le tube permet d'augmenter significativement la résistance aux efforts en déformation du bras flexible sur la partie où il est installé. A titre d'exemple purement illustratif, cette réalisation permet de consolider le bras sur la zone d'installation du tube et de conserver des parties souples sur le reste du bras flexible.

Avantageusement, les moyens de connexion assurent une connexion mécanique rotative selon laquelle le boitier est orientable autour d'un axe de connexion avec ledit bras flexible.

De cette manière, le moyen d'affichage peut être pivoté par rapport au bras flexible. Cette possibilité de réglage d'orientation du moyen d'affichage, par pivotement du boitier autour de l'axe de connexion, permet d'ajuster le positionnement du moyen d'affichage en nécessitant moins de manipulations du bras flexible. On comprendra qu'en limitant le nombre de manipulations du bras flexible, on réduit les contraintes appliquées au bras lors de réglages. La flexibilité du bras est alors moins sollicitée, ce qui prolonge la durée de vie du bras.

Selon un mode de réalisation possible, les moyens de connexion du bras flexible comprennent au moins un aimant. Dès lors, le boitier comprend au moins un élément de connexion attiré magnétiquement par l'aimant. Avantageusement, le bras flexible et ledit boitier sont connectés mécaniquement lorsque l'aimant et l'élément de connexion sont en contact. L'élément de connexion peut être par exemple un métal tel que du fer ou un aimant de polarité opposée à l'aimant du bras flexible.

Dans une réalisation possible, l'aimant et l'élément de connexion peuvent avantageusement être agencés pour permettre une rotation de l'un par rapport à l'autre lorsqu'ils sont en contact, tout en conservant la fonction de maintien mécanique du bras avec le boitier via l'attraction magnétique de l'aimant. Comme décrit plus loin, cette connexion mécanique rotative peut être aussi réalisée par l'intermédiaire d'une coopération de pièces mécaniques des moyens de connexion.

Selon une autre réalisation possible, plusieurs aimants peuvent être placés à l'extrémité du bras en tant que moyens de connexion, connectant alors mécaniquement le boitier et le bras par l'intermédiaire d'un ou plusieurs éléments de connexion du boitier.

Selon une réalisation possible, la coopération de l'aimant et de l'élément de connexion permet une connexion mécanique et électrique. En ce sens, la connexion formée par l'aimant et l'élément de connexion lorsqu'ils sont en contact, peut être conductrice en vue d'amener une alimentation électrique dans le boitier, par exemple pour alimenter électriquement le moyen d'affichage. Cet aspect est détaillé ci-après dans un exemple de réalisation.

Avantageusement, le bras flexible comprend un logement longitudinal, s'étendant entre les première et deuxième extrémités et recevant au moins un câble électrique. Le câble électrique relie électriquement un départ électrique du socle et un moyen de connexion électrique dudit moyen d'affichage lorsque le boitier et le bras flexible sont connectés mécaniquement.

Selon un mode de réalisation possible, le départ électrique du socle est une source électrique alimentant le moyen d'affichage, via le câble électrique, selon la norme IEEE 802.3af. Le câble électrique est alors un câble Ethernet qui fournit une alimentation électrique selon la norme IEEE 802.3af, aussi nommée POE pour « Power Over Ethernet ». Cette norme vise à faire passer une tension d'alimentation en plus des données transmises via une liaison Ethernet. Ce câble Ethernet est par exemple branché à sa première extrémité au départ électrique du socle, telle qu'une prise Ethernet POE, et alimente le moyen d'affichage via le moyen de connexion, par l'intermédiaire de sa deuxième extrémité. Le moyen de connexion peut lui aussi être une prise Ethernet adaptée pour recevoir une alimentation POE.

Ainsi, le moyen d'affichage peut être alimenté directement par le câble électrique et peut communiquer en outre des données via ce câble (qui est alors un câble Ethernet POE). Un seul câble est ainsi nécessaire pour assurer les fonctions d'alimentation et de communication (au lieu d'un câble par fonction habituellement). Ainsi, le nombre de liaisons filaires entre le socle et le moyen d'affichage est réduit, permettant ainsi d'alléger le dispositif, et notamment les masses suspendues par le bras.

Dans un autre mode de réalisation possible, lorsque le bras flexible est aimanté à sa deuxième extrémité, le câble électrique peut alimenter l'aimant. L'aimant conduit alors, par contact avec l'élément de connexion du boitier, l'alimentation fournie par le câble jusqu'au moyen de connexion électrique du moyen d'affichage. A cet effet, le moyen de connexion électrique peut être relié électriquement à l'élément de connexion du boitier de telle sorte qu'il peut recevoir l'alimentation électrique issue du câble du bras flexible.

Avantageusement, un joint torique d'étanchéité est placé à au moins une des deux extrémités du bras flexible.

De la sorte, l'étanchéité du dispositif est améliorée au niveau des connexions du bras avec le socle et/ou avec le boitier de protection. On comprendra que le flexible hélicoïdal et le câble électrique sont ainsi isolés des projections de liquide inhérentes aux nettoyages du dispositif (que ce soit des projections d'eau ou de produit désinfectant).

Selon un autre mode de réalisation possible, le logement longitudinal du bras flexible comprend en outre un câble de communication reliant un module de communication dudit socle et une unité de communication dudit moyen d'affichage lorsque le boitier et le bras flexible sont connectés mécaniquement.

Selon cette autre réalisation possible, le câble de communication permet d'assurer une communication filaire plus fiable qu'une communication de données sans-fil lorsque le câble électrique n'est pas un câble Ethernet POE.

Selon un mode de réalisation avantageux, le boitier est fermé et composé d'un matériau antibactérien avec, sur au moins une face du boitier, une zone transparente en correspondance d'une zone d'affichage du moyen d'affichage.

Ainsi, le boitier fermé isole efficacement son contenu des bactéries et des particules solides et liquides.

Dans un autre mode de réalisation possible, le boitier est composé d'un matériau antibactérien et comprend une ouverture en correspondance d'une zone d'affichage du moyen d'affichage, la zone d'affichage du moyen d'affichage étant recouverte d'un film transparent antibactérien de protection au moins sur la zone d'ouverture dudit boitier.

Dans ce mode de réalisation, le moyen d'affichage peut être agencé pour obturer complètement l'ouverture du boitier. En outre, un joint torique d'étanchéité peut être agencé entre le moyen d'affichage et le boitier au niveau de l'obturation pour y améliorer l'étanchéité. Par ailleurs, le film transparent antibactérien permet que le boitier, même au niveau de son ouverture, soit antibactérien sur toutes ses surfaces extérieures. Cela évite que l'utilisateur soit en contact de bactéries lors de manipulations du dispositif de support. En outre, avec l'ouverture, le moyen d'affichage est directement accessible par l'utilisateur et permet ainsi de conserver une bonne sensibilité de détection lorsque le moyen d'affichage est tactile.

Dans un mode de réalisation possible, le socle reçoit au moins une alimentation électrique selon la norme IEEE 802.3af (POE) et le départ électrique du socle est alimenté par l'alimentation électrique reçue.

Le dispositif peut par exemple être connecté à une prise Ethernet adaptée pour fournir une alimentation POE. Cette connexion a lieu en l'occurrence entre le socle et la prise Ethernet POE. Le moyen d'affichage peut recevoir directement cette alimentation de la prise Ethernet POE. Le dispositif peut en outre communiquer des données via cette liaison Ethernet. Par exemple, des données peuvent être échangées entre le moyen d'affichage et une entité informatique connectée au réseau Ethernet de l'établissement.

Selon un autre mode de réalisation, le socle reçoit au moins une première alimentation électrique, le socle comprenant en outre une source d'alimentation électrique apte à transformer la première alimentation électrique en une deuxième alimentation électrique selon la norme IEEE 802.3af (POE), ledit départ électrique du socle étant alimenté par ladite deuxième alimentation électrique.

Ainsi, lorsque l'alimentation reçue par le dispositif est une alimentation de 220 volts issue d'une installation électrique classique d'un établissement, la source d'alimentation électrique peut transformer cette alimentation selon une alimentation de 48 volts répondant au standard POE avec une puissance typiquement comprise entre 10 et 60 Watts.

Par ailleurs, selon une réalisation possible, le socle comprend une première source d'alimentation électrique autonome.

La première source d'alimentation électrique autonome, qui peut être une batterie par exemple, peut être rechargée par l'alimentation reçue par le dispositif ou par l'alimentation transformée par la source d'énergie électrique du socle. Cette batterie peut avantageusement permettre d'alimenter temporairement le moyen d'affichage par exemple lors d'une coupure de courant sur l'alimentation électrique reçue par le dispositif.

Selon une réalisation possible, le boitier comprend une deuxième source d'alimentation électrique autonome alimentant le moyen d'affichage lorsque le boitier et le bras flexible ne sont pas connectés mécaniquement.

La deuxième source d'alimentation électrique autonome, qui elle aussi peut être une batterie, peut être rechargée par l'alimentation reçue par le câble électrique du bras flexible. Cette batterie permet au moyen d'affichage de continuer à fonctionner alors que l'aimant n'est plus au contact de l'élément de connexion, par exemple lorsque l'utilisateur a désolidarisé le boitier du bras flexible.

Toutefois, dans un autre mode de réalisation avantageux, le moyen d'affichage ne dispose pas de batterie afin de limiter le poids embarqué dans le boitier et donc les masses suspendues du dispositif. Ainsi, les contraintes au point d'attache, i.e. la fixation du socle sur la paroi, sont moindres et évitent d'avoir à renforcer la paroi.

D'autres avantages et caractéristiques de l'invention apparaîtront à la lecture de la description détaillée ci-après d'exemples de réalisations présentés à titre illustratif, aucunement limitatifs, et en référence aux dessins annexés sur lesquels :
- la figure 1 illustre un exemple de réalisation du dispositif de support de moyen d'affichage selon l'invention ;
- la figure 2 présente une illustration d'une découpe du bras flexible laissant apparaitre les éléments qui composent le bras flexible ;
- les figures 3a et 3b illustrent des exemples de réalisation des moyens de connexion du bras avec le boitier du dispositif ;
- les figures 4a, 4b, 4c et 4d illustrent des exemples de réalisation du socle du dispositif ;
- les figures 5a et 5b sont des représentations schématiques d'exemple de réalisation du dispositif avec des composants électriques et électroniques pouvant être embarqués par le socle et le boitier ; et
- la figure 6 illustre un exemple du dispositif de support de moyen d'affichage dans un environnement intérieur d'établissement collectif de type chambre d'hôpital.

Pour des raisons de clarté, les dimensions des différents éléments représentés sur ces figures ne sont pas nécessairement en proportion avec leurs dimensions réelles. Sur les figures, des références identiques correspondent à des éléments identiques.

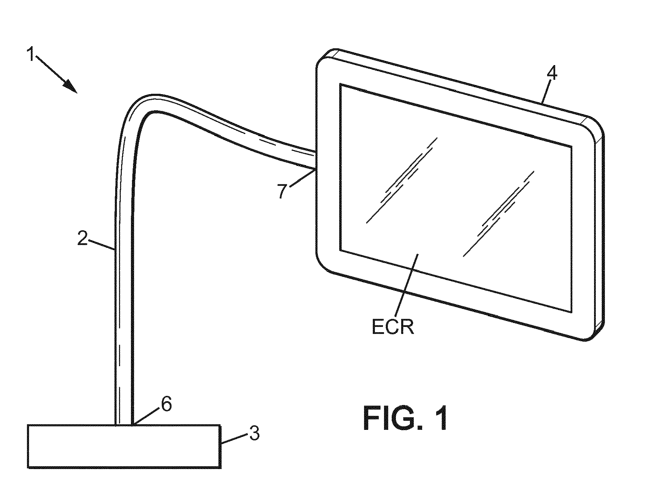

On se réfère à la figure 1 sur laquelle on a illustré un exemple de réalisation du dispositif 1 de support de moyen d'affichage selon l'invention.

Dans cet exemple de réalisation présenté sur la figure 1, le dispositif 1 comprend :
- un bras flexible 2 étanche et antibactérien, disposant d'une première extrémité 6 et d'une deuxième extrémité 7 ;
- un socle 3 placé à la première extrémité 6 ; et
- un boitier 4 étanche et antibactérien placé à la deuxième extrémité 7, lequel boitier 4 comprend le moyen d'affichage ECR.

Le bras flexible peut être manipulé et courbé par un utilisateur selon différentes configurations afin de régler la position du moyen d'affichage ECR. Ainsi, l'utilisateur peut régler l'orientation du boitier contenant le moyen d'affichage de sorte à ce que ce dernier soit bien en regard de l'utilisateur, ou positionné dans une configuration qui ne gêne pas l'utilisateur (dans une position rangée par exemple).

Le moyen d'affichage peut être un dispositif électronique disposant d'au moins un écran. Le moyen d'affichage peut se présenter sous la forme de :
- un poste de télévision,
- une tablette numérique,
- un Smartphone,
- un écran tactile,
- ou autre.

Le moyen d'affichage ECR peut éventuellement comprendre ou être connecté à des modules électroniques complémentaires de traitement de données, d'interface de communication et/ou d'alimentation électrique autonome, comme détaillé plus loin. Ces modules peuvent être embarqués dans le boitier étanche et antibactérien.

Les surfaces extérieures du bras flexible 2 et du boitier 4 sont avantageusement composé d'un matériau étanche et antibactérien. Comme développé ci-après, le matériau utilisé peut par exemple être à base de silicone mélangé à des particules d'argent ou de cuivre.

Le socle 3 peut comporter un boitier de protection dont la surface extérieure peut elle aussi être dans un matériau antibactérien tel que celui utilisé pour le boitier et/ou le bras flexible. Ainsi, l'intégralité des surfaces extérieures du dispositif 1 sont antibactériennes. Le dispositif peut ainsi être manipulé en limitant les expositions aux bactéries et donc les infections nosocomiales de l'utilisateur, même dans les milieux à risques comme les hôpitaux.

Le boitier de protection du socle 3 peut en outre être un boitier fermé étanche. On entend par « boitier fermé » un boitier qui une fois fixé sur une paroi et assemblé avec le bras flexible 2 et le boitier 4, ne présente pas d'ouverture apparente.

Le boitier peut en revanche comprendre une ouverture destinée à accueillir le bras flexible lors de l'assemblage du dispositif 1. Un joint torique d'étanchéité peut être prévu à cette zone d'accueil afin que la coopération de l'ouverture du boitier du socle 3 et l'extrémité 6 du bras flexible 2 soit étanche. D'éventuelles projections de liquides ne peuvent alors pas s'introduire dans le socle.

Le bras flexible peut comporter également un joint torique d'étanchéité à la deuxième extrémité 7, de telle sorte que la connexion du bras flexible et du boitier soit aussi étanche.

Ainsi, l'ensemble du dispositif est étanche ce qui limite les risques de dysfonctionnements électriques et électroniques du moyen d'affichage ECR et/ou des potentiels modules électroniques inclus dans le dispositif 1. D'après les essais, cet assemblage permet d'offrir une étanchéité du dispositif 1 répondant aux indices de protection IP64 et IP65 de la norme CEI 60529 de la Commission Electrotechnique Internationale.

Le boitier peut être une structure fermée comprenant un logement destiné à accueillir le moyen d'affichage ECR et d'autres modules électroniques connexes. Ici aussi, on entend par « structure fermée » un boitier qui une fois assemblé et connecté mécaniquement avec le bras flexible 2, ne présente pas d'ouverture apparente en sa surface extérieure. En outre, sur au moins une face du boitier, une zone transparente est prévue en correspondance de la zone d'affichage du moyen d'affichage ECR. Ainsi, l'utilisateur peut visualiser le moyen d'affichage, lequel est dès lors efficacement protégé de tout liquide.

Si le moyen d'affichage ECR comprend un écran tactile, il convient de limiter l'épaisseur du boitier au niveau de sa zone transparente pour que la détection tactile fonctionne une fois l'écran installé dans le boitier.

Selon une autre réalisation possible, en lieu et place de la zone transparente susmentionnée, le boitier comporte une ouverture en correspondance de la zone d'affichage du moyen d'affichage ECR. Dans ce mode de réalisation, c'est le moyen d'affichage ECR qui vient obturer l'ouverture et fermer le boitier 4. A cet effet, le moyen d'affichage ECR comprend au moins une surface d'affichage sensiblement plane qui coopère avec les bordures internes du boitier 4 en périphérie de l'ouverture. Un joint torique d'étanchéité peut être disposé entre le moyen d'affichage ECR et le boitier 4 afin d'assurer une bonne étanchéité du boitier au niveau de l'ouverture. Par ailleurs, le moyen d'affichage ECR est avantageusement recouvert d'un film transparent antibactérien de protection, et ce sur au moins la zone d'ouverture du boitier 4. L'ouverture permet d'atteindre directement l'écran tout en conservant l'étanchéité du boitier d'une part, et des surfaces extérieures de boitier antibactériennes d'autre part. En étant directement accessible, l'écran tactile peut ainsi présenter une bonne sensibilité de détection des manipulations tactiles de l'utilisateur.

Avantageusement, le moyen d'affichage est caractérisé par un poids relativement faible, typiquement d'un maximum de 2 ou 3 kg par exemple. Ainsi, les forces de contrainte exercées sont limitées et les moyens de fixation du socle à la paroi sont suffisants pour soutenir le dispositif de support sans nécessiter de renforts complémentaires.

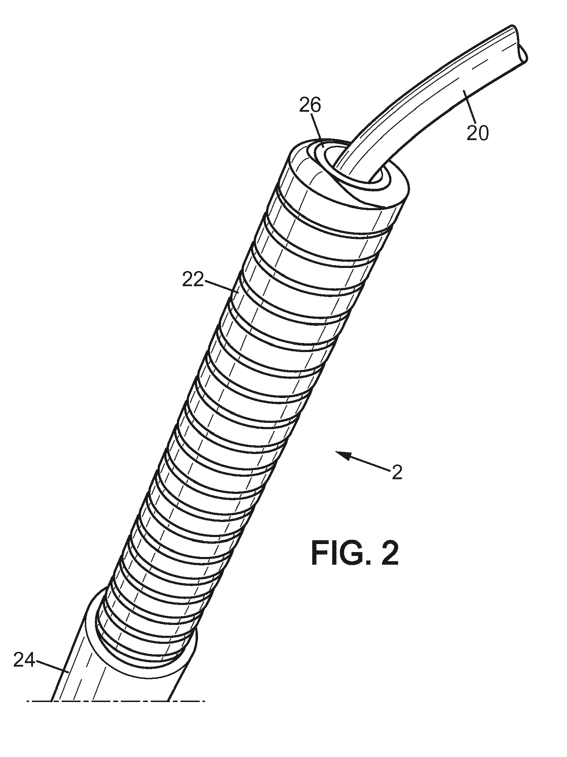

On se réfère maintenant à la figure 2 sur laquelle on a illustré une vue de découpe d'un exemple de réalisation du bras flexible 2, avec les éléments qui peuvent le composer. On retrouve notamment :
- un câble électrique 20 destiné à alimenter l'écran ECR du boitier 4 à partir d'une alimentation issue du départ électrique du socle 3 ;
- un flexible hélicoïdal en métal 22 ;
- une couche extérieure 24 souple et étanche, composée d'un matériau élastique et antibactérien.

A titre d'exemple, la couche extérieure 24 est à base de silicone, mélangé avec des particules d'argent qui apportent les propriétés antibactériennes à la couche extérieure 24. La couche recouvre avantageusement la totalité de la longueur du bras flexible 2, et ce de manière étanche, afin de protéger le flexible 22 et le câble électrique 20 des particules solides et liquides extérieures.

Lorsque l'on souhaite renforcer le bras flexible 2 au moins sur une partie du bras, par exemple pour éviter une déformation du bras sous le poids du boitier, un tube en métal 26 peut en outre être inséré dans bras flexible 2 au moins sur la partie du bras à renforcer. Ce tube de renfort 26 évite la casse du bras flexible lors de déformations trop importantes, et permet au bras flexible 2 de soutenir des poids plus conséquents.

Dans l'exemple de réalisation illustré à la figure 2, le tube 26 est inséré dans le flexible 22 et le tube est creux de sorte à recevoir le câble électrique 20. Ainsi, selon la rigidité du tube d'acier, le bras flexible présente une résistance plus importante voire une rigidité accrue sur la zone du bras où est installé le tube. A titre d'exemple purement illustratif, pour un bras flexible d'une longueur de 1,5 mètre, le tube de métal 26 peut être disposé sur une longueur de 1,2 mètre à partir de la première extrémité 6 placée au socle 3. Ainsi, la base du bras flexible est consolidée (plus rigide). En revanche, sur 0,3 mètre restant (ne disposant pas du tube de renfort), le bras reste plus souple et peut offrir une bonne flexibilité pour que l'écran puisse être aisément orienté par l'utilisateur.

En outre, la composition, la rigidité et le dimensionnement du métal utilisé pour le flexible hélicoïdal ou pour le tube de renfort, peuvent être ajustés en fonction du niveau de résistance souhaité à un effort en déformation pour le bras flexible, et du poids à supporter. A titre purement illustratif, lorsque le bras flexible est d'une longueur supérieure à 0,5 mètre, le métal utilisé pour le flexible est de l'acier peu flexible afin de pouvoir supporter le poids du boitier lorsque le bras est en position complètement déployé.

Par ailleurs, la composition et la rigidité du métal utilisé sont prévues pour autoriser un rayon de courbure limite suffisant sur au moins une partie du bras flexible, pour que l'utilisateur puisse disposer l'écran ECR dans une configuration dans laquelle il peut le visionner confortablement.

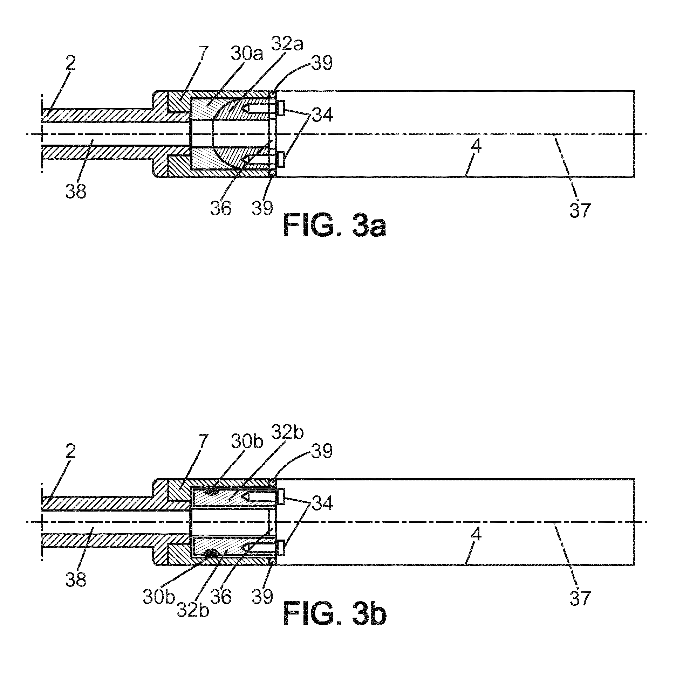

A la figure 3a, on a illustré un premier mode de réalisation possible des moyens de connexion (30,32) du bras flexible 2 et du boitier 4. Les moyens de connexion sont placés à la deuxième extrémité 7 du bras flexible 2 et peuvent consister en un aimant 30a destiné à attirer magnétiquement un élément de connexion 32a du boitier 4. La connexion mécanique du bras flexible 2 avec le boitier 4 est assurée par l'attraction magnétique de l'élément de connexion 32a créé par l'aimant 30a. A cet effet, l'élément de connexion 32a peut être par exemple une pièce métallique ou un aimant de polarité opposée à l'aimant 30a. L'élément de connexion 32a peut être fixé au boitier 4 via des moyens d'attache 34 tels que des vis ou des rivets.

De plus, le boitier prévoit une ouverture 36 destinée à recevoir le câble électrique 20 issu du socle 3 et qui, dans le logement 38, est amené via le bras flexible 2 jusqu'au boitier 4 en vue d'alimenter le moyen d'affichage ECR. A ce titre, l'élément de connexion 32 est avantageusement prévu avec un logement longitudinal dans la continuité du logement 38 et débouchant sur l'ouverture 36, dégageant ainsi un passage au câble électrique 20 pour accéder au boitier 4 via l'ouverture 36.

Par ailleurs, un joint torique d'étanchéité 39 peut être placé à l'extrémité 7 du bras flexible, entre le bras flexible et le boitier 4, afin d'éviter que les particules d'eau ou de poussières puissent pénétrer à l'intérieur de l'ensemble connecté mécaniquement.

A la figure 3b, on a illustré un deuxième mode de réalisation possible des moyens de connexion (30,32). Les moyens de connexion comportent ici une pièce d'accroche 30b telle qu'une protubérance de matière sur la périphérie intérieure de la deuxième extrémité 7. Cette pièce d'accroche 30b est destinée à coopérer avec une gouttière formée par l'élément de connexion 32b. L'élément de connexion 32b peut être fixé au boitier 4 avec les moyens d'attache 34.

Dans les deux modes de réalisation illustrés aux figures 3a et 3b, les moyens de connexion sont avantageusement conformés pour permettre une connexion mécanique rotative selon laquelle le boitier est orientable par rapport au bras flexible 2, par pivotement autour d'un axe de rotation 37 de connexion.

Par exemple, dans le mode de réalisation avec l'aimant, l'aimant 30a et l'élément de connexion 32a peuvent être agencés pour permettre une rotation de l'un par rapport à l'autre lorsqu'ils sont en contact. A cet effet, la surface de contact entre l'aimant et l'élément de connexion 32a est avantageusement lisse afin d'autoriser le pivotement mécanique autour de l'axe 37. Le boitier 4 peut alors être orienté indépendamment du bras flexible 2 tout en conservant la fonction de maintien mécanique du bras flexible avec le boitier via l'attraction magnétique de l'aimant.

Par exemple encore, concernant le mode de réalisation avec la pièce d'accroche 30b (figure 3b), la gouttière de l'élément de connexion 32b est prévue pour maintenir mécaniquement la connexion du boitier 4 avec le bras flexible 2, tout en autorisant un coulissement de la protubérance dans la gouttière. Ainsi, le boitier peut pivoter autour de l'axe 37 de connexion, et ce indépendamment du bras flexible.

On comprendra que le nombre de manipulations nécessaires du bras flexible pour correctement positionner le moyen d'affichage est ainsi diminué par rapport à une fixation non rotative. Elle permet donc d'obtenir moins de contraintes en flexion du bras et donc une durée de vie plus longue, ceci sans augmenter notablement le poids du dispositif.

Par ailleurs, la connexion mécanique du bras et du boitier assurée par les moyens de connexion peut être prévue pour autoriser une éventuelle déconnexion, par exemple lorsque l'utilisateur souhaite prendre en main le boitier indépendamment de son support, ou réaliser une réparation du boitier. A cet effet, lorsque l'utilisateur applique une force de désolidarisation du bras et du boitier supérieure à l'attraction magnétique de l'aimant 30a ou à la résistance mécanique de la pièce d'accroche 30b avec l'élément de connexion 32, il est possible de désolidariser le boitier et le bras sans endommager les moyens de connexion.

Dans une réalisation possible (non représentée sur les figures), des systèmes de butées ou de crantages au niveau des moyens de connexion rotatifs peuvent être prévus pour permettre d'ajuster ou bloquer la rotation du boitier par rapport au bras.

Selon un autre mode de réalisation possible (non illustré sur les figures), la coopération de l'aimant 30a et de l'élément de connexion 32a permet par ailleurs d'établir une connexion électrique. Pour ce faire, il est prévu que le câble électrique 20 alimente uniquement l'aimant 30a. Lorsque l'élément de connexion 32a est au contact de l'aimant 30a, la connexion mécanique formée est aussi conductrice et permet d'amener l'alimentation issue du socle 3 dans le boitier 4. Ce mode de réalisation est particulièrement avantageux lorsque le boitier 4 est prévu pour pouvoir être déconnecté du bras flexible 2.

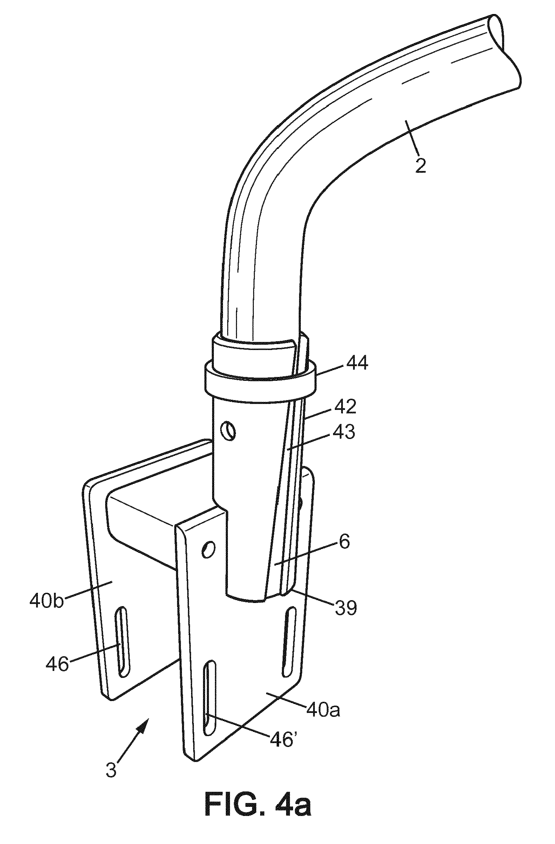

On se réfère maintenant à la figure 4a qui illustre une vue partielle (sans le boitier de protection du socle) d'un exemple de réalisation du socle 3. Avantageusement, le socle 3 dispose d'une première plaque 40a qui soutient un tube de renfort 42 dans lequel vient s'insérer la première extrémité 6 du bras flexible 2. Le tube de renfort 42 peut par exemple être en inox et soudé à la première plaque 40a. Le tube 42 comprend une fente longitudinale 43 permettant de modifier légèrement le diamètre du tube 42. Lorsque le bras flexible 2 est inséré dans le tube 42, une bague 44 est disposée autour du tube 42 afin de réduire le diamètre du tube et d'enserrer l'extrémité 6 du bras flexible 2. Le tube de renfort 42 maintient alors fermement le bras flexible 2 et renforce sa base au niveau du socle 3.

Le socle 3 comprend en outre une deuxième plaque 40b pour la fixation du socle 3 à une paroi. Dans une réalisation possible, la deuxième plaque 40b peut être fixée à un mur ou une cloison par des moyens de fixation tels que des vis, des rivets ou autre. Ces moyens de fixation sont prévus pour traverser la deuxième plaque 40b via des ouvertures 46 prévues à cet effet. Le poids du dispositif étant limité grâce à l'utilisation de peu de pièces, ces simples moyens de fixation sont suffisants pour installer convenablement et durablement le dispositif 1. Selon une autre réalisation possible, le socle 3 peut être installé sur une paroi de meuble telle qu'un lit d'hôpital ou une table de chevet. Les moyens de fixation susmentionnés sont alors introduits dans les ouvertures 46 ou 46' des plaques 40a et 40b afin de fixer le boitier à une armature de lit d'hôpital par exemple.

En outre, le socle dispose d'un boitier de protection (non représenté sur les figures) étanche et antibactérien, qui isole le contenu du socle. Le contenu du socle 3 peut par exemple être disposé entre les deux plaques 40a et 40b. Afin d'améliorer encore l'étanchéité du bras flexible, un joint torique d'étanchéité 39 peut être placé à l'extrémité 6 du bras flexible 2.

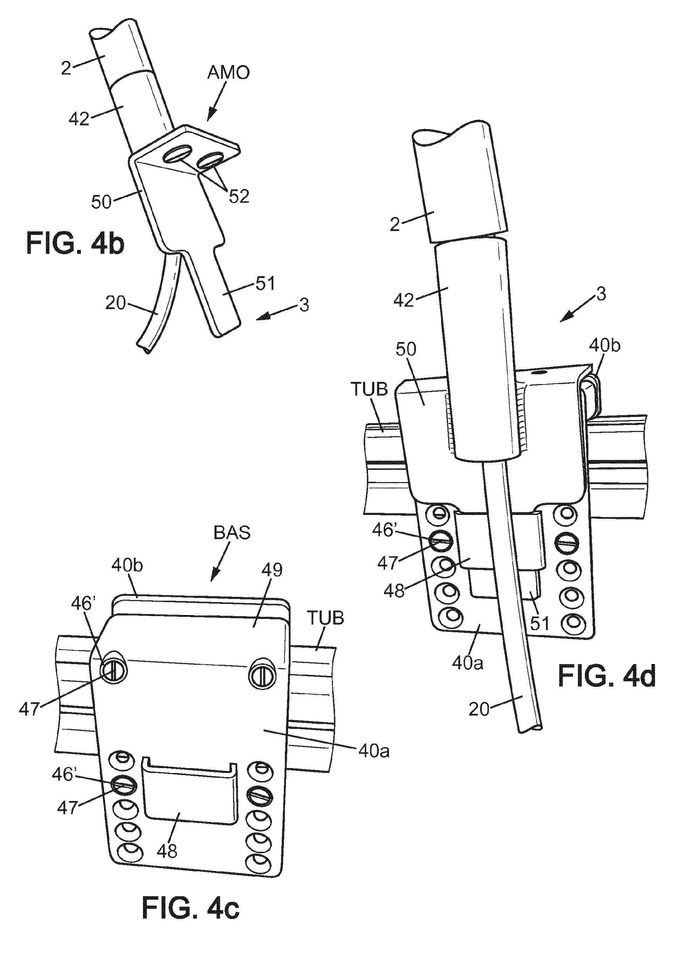

Aux figures 4b, 4c et 4d, on a illustré une autre réalisation possible du socle. Dans cette réalisation, le socle 3 comprend une base BAS fixée sur une paroi. Dans cet exemple, la paroi est une tubulure TUB accrochée à un meuble (une table de chevet, une cloison ou un lit typiquement). La base BAS est prévue dans cet exemple pour que les plaques 40a et 40b soient placées de part et d'autre de la tubulure TUB, et viennent par la suite enserrer fermement cette tubulure lorsque des vis 47 sont introduites dans les ouvertures 46, 46' et y sont vissées. La base BAS comprend une zone d'accueil 48 d'une partie amovible AMO du socle 3. Cette partie AMO est placée à la première extrémité du bras flexible 2 et comporte le tube 42 de renfort. La partie amovible AMO comprend en outre une pièce mécanique 50 avec une forme en L dont une extrémité 51 est agencée pour coopérer avec la zone d'accueil 48. Afin de supporter mécaniquement la partie amovible AMO, une partie supérieure 49 de la base BAS est quant à elle réalisée pour coopérer avec l'épaulement conformé par la forme en L de la pièce mécanique 50. Dès lors que l'extrémité 51 de la partie amovible AMO est introduite dans la zone d'accueil 48 de la base BAS, le socle 3 est maintenu à la tubulure TUB via cette coopération.

Afin de solidariser mécaniquement la base BAS et de la partie amovible AMO, il convient de prévoir un ou plusieurs moyens de solidarisation de la base avec la partie amovible. A cet effet, des aimants 52 peuvent être installés (par collage ou soudure par exemple) à la partie amovible AMO en vue d'attirer magnétiquement la base BAS qui est alors dans un matériau ferromagnétique par exemple. L'attraction magnétique inhérente entre ces pièces (notamment lorsqu'elles sont à proximité) permet de solidariser mécaniquement la base BAS et la partie amovible AMO.

Par ailleurs, la base BAS et la partie AMO peuvent être recouvertes d'une peinture antibactérienne, comprenant notamment des particules d'argent et/ou de cuivre.

Le câble électrique 20, issu du bras 2, peut être un câble Ethernet qui est directement branché à une prise POE murale de l'établissement hospitalier d'une part, et au moyen d'affichage d'autre part. Ainsi, le câble 20 apporte en direct une liaison d'alimentation et de communication au moyen d'affichage ECR du boitier 4. Dans une telle réalisation, le câble 20 peut être une liaison Ethernet étanche, avec une gaine antibactérienne comprenant des particules d'argent et/ou de cuivre. Le câble 20 peut être branché à toutes prises Ethernet du réseau de l'établissement.

Cette réalisation permet une implantation mécanique et électrique simple et amovible du dispositif de support, et ce tout en conservant les propriétés étanches et antibactériennes du dispositif. A titre d'exemple purement illustratif, cette réalisation permet en outre à un utilisateur de fixer la partie amovible AMO sur n'importe qu'elle base BAS préinstallée (sur un lit, un meuble un mur ou autre), et de simplement brancher le câble 20 à une prise Ethernet à proximité en vue de faire fonctionner le moyen d'affichage ECR. Le dispositif est simple à installer et à connecter et ne nécessite pas d'adaptions ou d'installations mécaniques ou électriques particulières.

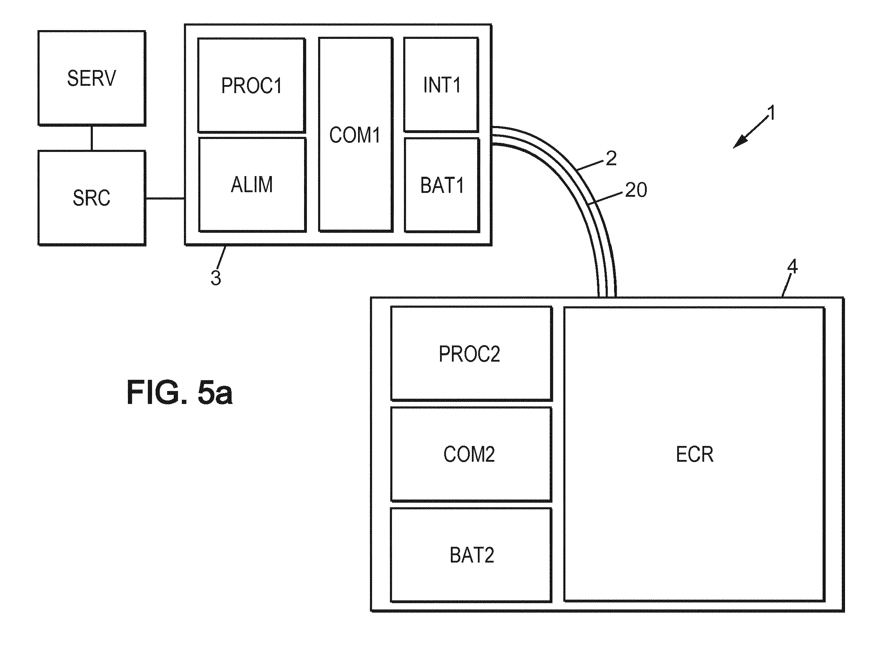

A la figure 5a, on a représenté schématiquement les modules électroniques que peut comporter le dispositif 1 de support.

Le socle 3 est avantageusement branché à une source d'énergie électrique SRC telle que :
- une prise électrique d'un réseau électrique classique d'établissement collectif (courant alternatif, 50 Hz, 220 volts par exemple) ;
- une prise électrique CPL d'un réseau électrique d'établissement collectif ;
- une prise Ethernet, de type RJ45, fournissant une alimentation POE d'un réseau de communication d'établissement collectif (courant continu, 48 volts, 10 à 60 watts) ;
- ou autre.

Pour une prise CPL ou POE, celle-ci peut être connectée à un serveur SERV via le réseau électrique ou de communication de l'établissement afin de pouvoir échanger des données telles que des données multimédias (audio, images, vidéos), internet ou autre. Cette distribution de données sur le réseau, entre le serveur SERV et le dispositif 1, peut se faire par une diffusion de paquets de données via un adressage IP (pour « Internet Protocol »), ou une multidiffusion sur IP (nommée « multicast IP » en anglais). Dans un mode de réalisation avantageux, le serveur SERV diffuse au moins un flux multicast IP sur le réseau électrique CPL ou sur le réseau de communication POE. Ce flux multicast IP comprend avantageusement des données destinées aux utilisateurs du dispositif 1 dans l'établissement. Le dispositif 1 est apte à lire les données du flux multicast qui lui sont adressées et à afficher le contenu correspondant sur le moyen d'affichage ECR. L'alimentation électrique et le flux IP sont alors fournis au moyen d'affichage via un seul et même câble. Dans une réalisation possible, les données du flux multicast IP pourront être protégées par une méthode de chiffrage de données (mise en oeuvre par le serveur SERV par exemple) de sorte à ce qu'elles soient déchiffrées et lues uniquement par un ou 5 plusieurs moyens d'affichage déterminés auquel elles sont destinées dans le réseau de l'établissement.

Selon une réalisation possible, lorsque le socle est branché à une prise SRC de type Ethernet POE, le socle 3 peut alimenter directement le câble électrique 20 avec l'alimentation électrique POE reçue. Typiquement l'alimentation fournit au départ électrique du socle 3 est d'une tension de 48 volts avec une puissance de 12 watts par exemple. Le moyen d'affichage reçoit une alimentation POE pour fonctionner et peut même recevoir directement les données issues du serveur SERV via cette alimentation POE issue de la prise SRC. Ainsi, l'alimentation électrique du dispositif 1 est complètement en POE.

Dans une autre réalisation possible, l'alimentation reçue est une alimentation électrique classique ou CPL, auquel cas le socle dispose d'une source d'alimentation électrique ALIM prévue pour transformer l'alimentation électrique reçue en une alimentation POE en vue d'alimenter le moyen d'affichage ECR dans le boitier 4. La source ALIM peut notamment transformer l'alimentation alternative de 220 volts en une alimentation continue de 48 volts avec une puissance comprise entre 10 et 60 watts. Une telle alimentation POE est particulièrement adaptée pour l'alimentation électrique de modules électroniques tels que le moyen d'affichage ECR du boitier 4, notamment lorsque celui-ci est une tablette numérique, un écran tactile ou autre.

Par ailleurs, le socle peut en outre disposer d'une interface de connexion INT1 prévue pour que des modules électroniques extérieurs puissent y être branchés. Cette interface de connexion peut être :
- une prise USB,
- une prise Ethernet,
- ou autre.

A titre d'exemple, l'interface de connexion INT1 permet de brancher en USB un relai Wi-Fi relatif au réseau sans-fil de l'établissement, ou une clé USB contenant des données multimédia de l'utilisateur du dispositif 1.

Le socle peut comporter une première source d'alimentation électrique autonome, telle qu'une batterie BAT1. Celle-ci peut être rechargée par l'alimentation reçue de la prise SRC par le socle, ou par l'alimentation transformée directement par la source d'énergie électrique ALIM du socle 3. La batterie BAT1 permet notamment d'alimenter temporairement le moyen d'affichage par exemple lors d'une coupure de courant à la prise SRC.

Le socle 3 peut comprendre en outre un processeur PROC1 destiné à traiter les données échangées avec :
- le serveur SERV via le réseau électrique CPL ou POE ;
- l'interface de communication VINT1 ;
- le module de communication COM1, qui communique notamment avec l'unité de communication COM2.

Comme précité, le module COM1 et l'unité COM2 de communication peuvent communiquer entre eux d'une part via une liaison filaire :
- soit via le câble électrique 20 lorsque celui-ci est du type câble Ethernet POE,
- soit via une liaison de communication séparée logée également dans le bras flexible 2.

D'autre part, le module COM1 et l'unité COM2 de communication peuvent communiquer entre eux par une communication sans-fil établie en Wi-Fi, Bluetooth ou autre.

Ainsi, le module de communication COM1 du socle 3 peut transmettre et recevoir des données avec l'unité de communication COM2 dans le boitier 4 afin d'envoyer des données à afficher sur le moyen d'affichage par exemple, ou de recevoir des instructions ou des requêtes à envoyer auprès du serveur SERV. L'unité de communication COM2 récupère des données qui peuvent ainsi être traitées par le processeur PROC2 afin d'afficher le contenu relatif aux données qui peut être une page internet, une vidéo à la demande, un programme télévisé ou autre.

Dans un mode de réalisation particulièrement avantageux, les données reçues par le processeur PROC1 ou PROC2 sont notamment relative à un flux multicast IP diffusé par le serveur SERV sur le réseau électrique CPL ou de communication POE de l'établissement, qui permet à l'utilisateur de récupérer des contenus personnalisés à partir du dispositif 1 et de les afficher sur le moyen d'affichage ECR.

A cet effet, le processeur embarqué dans le boiter est avantageusement un moyen de traitement de données comportant un système d'exploitation (Android par exemple) qui permet à l'utilisateur de naviguer et d'utiliser le dispositif pour avoir accès à des services internet ou d'autres services mis à disposition par le serveur SERV. A cet effet, on comprendra que le serveur SERV peut être une entité informatique d'un hôpital permettant de distribuer des services à la demande aux patients qui occupent les chambres et qui ont accès aux dispositifs 1 dans l'établissement.

Dans un mode de réalisation possible, le socle 3 peut comprendre lui aussi un processeur PROC1 qui traite les données échangées avec le serveur SERV ou d'autres entités informatiques d'un réseau étendu (de type internet) connecté à la prise SRC. Le processeur PROC1 peut aussi traiter les données communiquées avec le processeur PROC2.

Le boitier 4 peut comporter en outre une deuxième source d'alimentation électrique autonome telle que la batterie BAT2. Cette batterie peut être rechargée par l'alimentation reçue du câble électrique 20, avantageusement de 48 volts et d'une puissance entre 10 et 60 watts. Cette batterie BAT2 permet notamment au moyen d'affichage de continuer à fonctionner lorsque le boitier n'est plus connecté électriquement et mécaniquement au bras flexible.

Dans une réalisation particulièrement avantageuse, le boitier 4 et le socle 3 comportent un minimum de modules électroniques afin de limiter le poids du dispositif (par exemple à un poids d'environ 2 kg), et notamment les masses suspendues par le bras flexible.

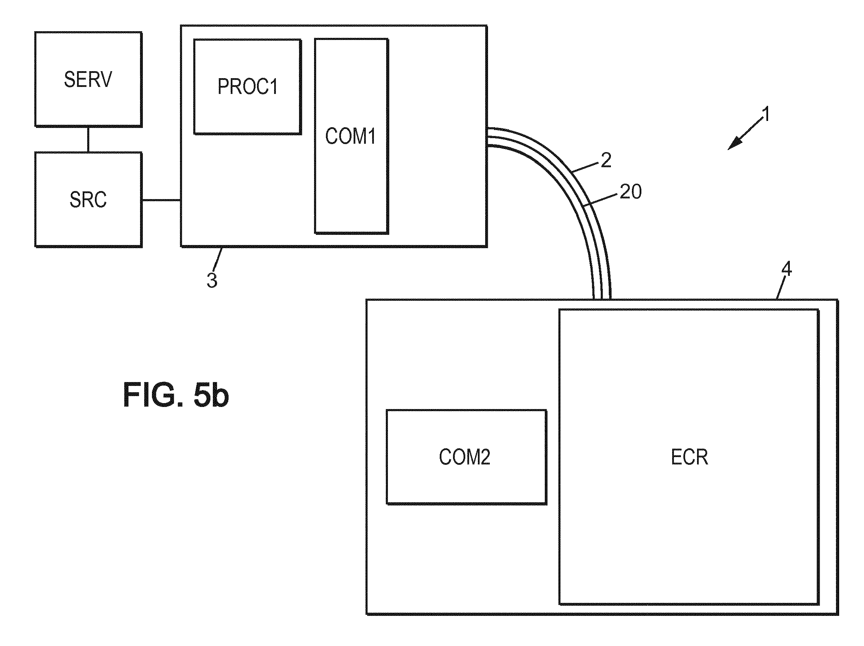

A la figure 5b, on a présenté schématiquement cet exemple de réalisation du dispositif. Dans un tel mode de réalisation, le processeur PROC 1 peut par exemple embarquer le système d'exploitation susmentionné (de type Android ou autre) et traite les données multimédia issues du serveur SERV (notamment le flux multicast IP). Le module COM1 est alors prévu pour transmettre au module de communication COM2 les données d'affichage traitées par le processeur PROC1 afin de les afficher sur le moyen d'affichage ECR. Dans ce mode de réalisation, la communication est faite en filaire via la liaison POE établie avec le câble électrique 20 qui est alors un câble Ethernet POE.

Ainsi, des données peuvent être échangées avec le serveur SERV afin d'offrir des services divers à l'utilisateur sur le moyen d'affichage ECR, tout en limitant considérablement le nombre de modules électroniques et les liaisons électriques et de communication. De cette manière, pour un bras flexible de 1 mètre environ, il est possible de maintenir le poids du dispositif sous les 5 kg (voire même sous les 2 kg).

Outre le bras flexible d'un seul tenant qui allège le dispositif, les contraintes de poids inhérentes au boitier et au socle sont limitées dans la réalisation susmentionnée car le poids du dispositif et les masses suspendues sont faibles. Il n'est alors pas nécessaire de renforcer la paroi sur laquelle est installé le dispositif 1.

Aussi, on comprendra que le processeur PROC2 et la batterie BAT2 sont optionnels pour le boitier 4 et peuvent ne pas y être embarqués. De même, la batterie BAT1 du socle, la source d'énergie électrique ALIM, l'interface de communication INT1 sont avantageuses pour la réalisation du socle, mais restent optionnelles.

Par ailleurs, il convient de noter que l'alimentation en POE permet aussi de limiter le poids du dispositif car il n'y a qu'un seul et même câble logé dans le bras flexible.

Dans une autre réalisation possible, le câble 20 est Ethernet et relie directement la source SRC, qui peut être une prise Ethernet POE, avec le moyen d'affichage ECR. Le départ électrique du socle 3 est donc constitué par l'alimentation POE reçue par le câble 20 via la prise Ethernet POE. Le processeur PROC2 est alors embarqué dans le boitier 4 afin de traiter pour le moyen ECR les données communiquées via le câble 20 Ethernet. Dans cette réalisation, le socle 3 peut être amovible conformément à l'exemple de réalisation illustré aux figures 4b à 4d. En l'espèce, comme l'alimentation et les données parviennent en POE directement au moyen d'affichage dans le boitier, aucun module électronique n'est requis dans le socle. Seul un arrangement particulier de pièces mécaniques tel que précité, peut être prévu afin que le dispositif soit amovible.

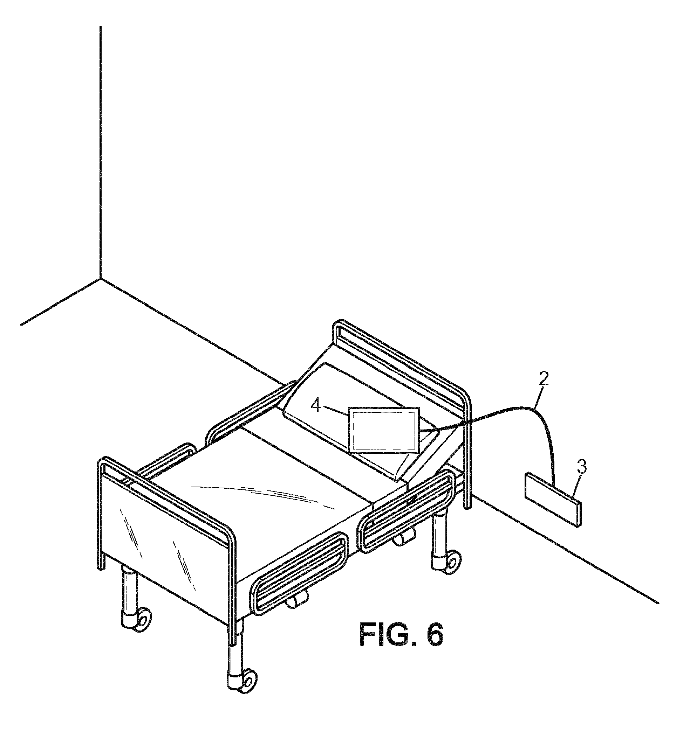

A la figure 6, on a illustré un exemple dans lequel le dispositif 1 de support de moyen d'affichage est installé dans une chambre d'hôpital, sur une paroi murale de celle-ci. Le socle 3 est fixé au mur de la chambre via les moyens de fixation précités. Comme le poids est faible (par exemple de 2 kg environ), aucune installation particulière de renfort au niveau du mur n'est nécessaire. En outre, ainsi disposé sur le mur à proximité de son lit, l'utilisateur peut avoir accès facilement au dispositif et en régler aisément l'orientation. Par ailleurs, le personnel hospitalier peut écarter le bras flexible du lit d'hôpital pour avoir accès au patient sans être gêné lors des interventions médicales.

Selon d'autres réalisations possibles, les moyens de fixation du socle permettent de fixer le dispositif à de nombreux points d'ancrages potentiels, tels qu'une paroi de meuble de chevet ou de lit du patient. De la sorte, le dispositif reste à proximité du patient et facilement accessible. Le patient peut ensuite, à partir du moyen d'affichage, accéder à des services télévisés, des pages internet, des jeux, ou autre.

Par ailleurs, les architectures réseaux Ethernet se retrouvent dans de nombreux établissements collectifs, lesquelles permettent d'offrir une même architecture pour alimenter et communiquer en POE avec des équipements électroniques tels que le moyen d'affichage ECR du dispositif 1. Ainsi, l'installation habituelle d'une prise électrique supplémentaire par dispositif 1 installé n'est pas nécessaire.

Le bras flexible est d'un seul tenant et présente une bonne manoeuvrabilité par l'utilisateur. Il offre un maintien mécanique permettant de supporter le poids du boitier une fois que le bras a été mis en position, tout en restant léger car il ne nécessite pas un grand nombre de pièces mécaniques telles que des articulations mécaniques.

Dans l'exemple de réalisation illustré, le bras flexible 2 fait une longueur de 1 mètre environ, longueur qui permet de couvrir un rayon de manoeuvre suffisant pour que le patient ait accès facilement au dispositif 1. Par ailleurs, un médecin intervenant sur le patient peut aussi orienter le dispositif vers lui, par exemple pour consulter le dossier du patient en adressant par exemple une requête des données du patient auprès du serveur SERV via le réseau de l'hôpital.

En plus d'être antibactérien, l'ensemble boitier 4 et bras flexible 2 est étanche et donc facilement nettoyable. Par exemple, le dispositif 1 peut être nettoyé vigoureusement avec de l'eau et/ou des produits désinfectants, sans risquer d'endommager l'électronique embarquée du dispositif. Le dispositif donc être nettoyé plus efficacement sans risque de dommage, ce qui améliore encore les conditions sanitaires de l'environnement d'un patient et limite à nouveau les risques d'infections nosocomiales.

Aussi, on comprendra que ce dispositif est particulièrement adapté à une utilisation dans des établissements collectifs de santé, où les maladies nosocomiales sont une problématique majeure.

Avantageusement, le bras flexible peut être prévu pour une longueur comprise notamment entre 0,2 et 1,5 mètre. Sur cette plage de longueur, il a été constaté que le bras flexible selon l'invention (avec ou sans tube de renfort), présente une bonne maniabilité et supporte un poids de boitier 4 pouvant aller jusqu'à 5 kg.

Compte tenu des modes de réalisation qui précèdent, on comprend donc que le dispositif a notamment pour avantages d'être :
- antibactérien et étanche ;
- amovible (pouvant être installé sur différents points d'attaches sans nécessiter de modification significative d'installation) ;
- alimenté directement selon la norme POE via le réseau Ethernet existant (aucune modification de l'infrastructure électrique de l'établissement et/ou de la paroi où le dispositif est fixé n'est requise).

Bien entendu, la présente invention a été décrite selon quelques exemples mais peut s'appliquer à d'autres réalisations qui apparaitront à l'homme du métier. A titre d'exemple, le socle peut par exemple comprendre des moyens de fixation agencés pour être connectés à une prise électrique de la paroi. Ainsi, le socle est fixé sur une prise électrique qui peut lui fournir directement l'alimentation électrique requise en vue d'alimenter le moyen d'affichage via une alimentation transformée en POE.

## Revendications

1. Dispositif (1) de support de moyen d'affichage (ECR) comportant au moins :
- un bras flexible (2), étanche et antibactérien ayant une première (6) et une deuxième extrémité (7) ;
- un socle (3) placé à la première extrémité (6) du bras flexible (2), ledit socle comportant des moyens de fixation (46,46') dudit dispositif (1) à une paroi ;
- des moyens de connexion (30,32) à un boitier (4), étanche et antibactérien comprenant le moyen d'affichage (ECR), lesdits moyens de connexion étant placés à la deuxième extrémité (7) du bras flexible (2) ;
et dans lequel le bras flexible (2) et le boitier (4) connectés mécaniquement via lesdits moyens de connexion, forment un ensemble étanche et antibactérien.

2. Dispositif (1) de support selon la revendication 1, dans lequel le bras flexible (2) comprend au moins :
- un flexible hélicoïdal en métal (22) ; et
- une couche extérieure (24) souple et étanche, composée d'un matériau antibactérien.

3. Dispositif (1) de support selon la revendication 2, dans lequel ledit matériau antibactérien qui compose la couche extérieure souple (24) est à base de silicone mélangée à des particules d'argent et/ou de cuivre.

4. Dispositif (1) de support selon l'une des revendications 2 ou 3, dans lequel le bras flexible (2) comprend en outre, sous la couche extérieure souple (24) et le long d'au moins une partie du bras flexible, un tube en métal (26).

5. Dispositif (1) de support selon l'une des revendications précédentes, dans lequel lesdits moyens de connexion (30,32) assurent une connexion mécanique rotative selon laquelle le boitier (4) est orientable autour d'un axe de connexion (37) avec ledit bras flexible (2).

6. Dispositif (1) de support selon l'une des revendications précédentes, dans lequel :
- lesdits moyens de connexion (30,32) du bras flexible (2) comprennent au moins un aimant (30a) ;
- ledit boitier (4) comprend au moins un élément de connexion (32) attiré magnétiquement par ledit aimant (30) ;
ledit bras flexible et ledit boitier étant connectés mécaniquement lorsque l'aimant et l'élément de connexion sont en contact.

7. Dispositif (1) de support selon l'une des revendications précédentes, dans lequel ledit bras flexible (2) comprend un logement longitudinal (38), s'étendant entre les première et deuxième extrémités et recevant au moins un câble électrique (20) qui relie électriquement un départ électrique du socle (3) et un moyen de connexion électrique dudit moyen d'affichage (ECR) lorsque le boitier et le bras flexible sont connectés mécaniquement.

8. Dispositif (1) de support selon l'une des revendications précédentes, dans lequel un joint torique d'étanchéité (39) est placé à au moins une des deux extrémités (6,7) du bras flexible (2).

9. Dispositif (1) de support selon l'une des revendications 7 ou 8, dans lequel ledit départ électrique du socle (3) est une source électrique alimentant ledit moyen d'affichage (ECR), via ledit câble électrique (20), selon la norme IEEE 802.3af.

10. Dispositif (1) de support selon l'une des revendications 7 ou 8, dans lequel ledit logement longitudinal (38) dudit bras flexible (2) comprend en outre un câble de communication reliant un module de communication (COM1) dudit socle (3) et une unité de communication (COM2) dudit moyen d'affichage (ECR) lorsque le boitier et bras flexible sont connectés mécaniquement.

11. Dispositif (1) de support selon l'une des revendications précédentes, dans lequel ledit boitier (4) est fermé et composé d'un matériau antibactérien avec, sur au moins une face du boitier, une zone transparente en correspondance d'une zone d'affichage du moyen d'affichage (ECR).

12. Dispositif (1) de support selon l'une des revendications 1 à 10, dans lequel ledit boitier (4) est composé d'un matériau antibactérien et comprend une ouverture en correspondance d'une zone d'affichage du moyen d'affichage (ECR), la zone d'affichage du moyen d'affichage (ECR) étant recouverte d'un film transparent antibactérien de protection au moins sur la zone d'ouverture dudit boitier (4).

13. Dispositif (1) de support selon l'une des revendications 7 à 12, dans lequel le socle (3) reçoit au moins une alimentation électrique selon la norme IEEE 802.3af, ledit départ électrique du socle étant alimenté par ladite alimentation électrique reçue.

14. Dispositif (1) de support selon la revendication 7 à 12, dans lequel le socle (3) reçoit au moins une première alimentation électrique, le socle comprenant en outre une source d'alimentation électrique (ALIM) apte à transformer la première alimentation électrique en une deuxième alimentation électrique selon la norme IEEE 802.3af, ledit départ électrique du socle étant alimenté par ladite deuxième alimentation électrique.

15. Dispositif (1) de support selon l'une des revendications précédentes, dans lequel le socle (3) comprend une première source d'alimentation électrique autonome (BAT1).

16. Dispositif (1) de support selon l'une des revendications précédentes, dans lequel le boitier (4) comprend une deuxième source d'alimentation électrique autonome (BAT2) alimentant ledit moyen d'affichage (5) lorsque ledit boitier (4) et le bras flexible (2) ne sont pas connectés mécaniquement.
